# EUROPEAN PATENT APPLICATION

(11) **EP 4 566 883 A1**
(43) Date of publication of application: **11.06.2025**
(21) Application number: 23215045.8
(22) Date of filing: 07.12.2023
(51) Int. Cl.: B60Q 1/44, B62D 35/00, B62D 37/02

(54) **AERODYNAMIC SYSTEM WITH VEHICLE LIGHT**

(71) Applicant: Wuhan Lotus Cars Co., Ltd., Wuhan, Hubei (CN)
(72) Inventor: Gross, Martin, 65428 Rüsselsheim (DE); Langkabel, Frank, 55283 Nierstein (DE); Haberkorn, Rouven, 65934 Frankfurt am Main (DE); Ndjeundoun, Paul, 65428 Rüsselsheim (DE); Neumann, Alexander, 64579 Gernsheim (DE); Wiech, Thomas, 64295 Darmstadt (DE)
(74) Representative: Elzaburu S.L.P.

(57) **Abstract**

An aerodynamic system (100; 200; 400; 500; 600; 700; 802) for a vehicle (800) comprises an aerodynamic component (110; 210; 410; 810) which is configured to be movable relative to a body of the vehicle (800) between a retracted position and at least one extended position of the aerodynamic system (100; 200; 400; 500; 600; 700; 802), when the aerodynamic system (100; 200; 400; 500; 600; 700; 802) is mounted on the vehicle (800). The aerodynamic system (100; 200; 400; 500; 600; 700; 802) further comprises at least one lighting device (120; 220; 420; 520; 620; 720; 820) for the vehicle (800), the at least one lighting device (120; 220; 420; 520; 620; 720; 820) being arranged on the aerodynamic component (110; 210; 410; 810), wherein the at least one lighting device (120; 220; 420; 520; 620; 720; 820) is integrated in an exterior shell (112; 212; 412) of the aerodynamic component (110; 210; 410; 810), and the exterior shell (112; 212; 412) of the aerodynamic component (110; 210; 410; 810) doubles as a housing of the at least one lighting device (120; 220; 420; 520; 620; 720; 820), in particular wherein the exterior shell (112; 212; 412) constitutes both a housing of the aerodynamic component (110; 210; 410; 810) and a housing of the at least one lighting device (120; 220; 420; 520; 620; 720; 820). The aerodynamic system (100; 200; 400; 500; 600; 700; 802) further comprises a variable supply line (140; 240; 300; 440) for the at least one lighting device (120; 220; 420; 520; 620; 720; 820), the variable supply line (140; 240; 300; 440) being adapted to transmit an operational supply provided by at least one supply source (822) of the vehicle (800) to the at least one lighting device (120; 220; 420; 520; 620; 720; 820), wherein the variable supply line (140; 240; 300; 440) is variable at least in accordance with a movement range of the aerodynamic component (110; 210; 410; 810) between the retracted position and the at least one extended position. The at least one lighting device (120; 220; 420; 520; 620; 720; 820) is arranged to be visible from outside the vehicle (800) when the aerodynamic system (100; 200; 400; 500; 600; 700; 802) is in the retracted position.

## Description

The invention relates to an aerodynamic system for a vehicle and to a vehicle comprising such aerodynamic system.

### Background

In the construction of vehicles, limitations posed by legal regulations and by a driver's practical needs often compete with a desired compactness and/or desired aerodynamics of the vehicle. Typical requirements include an exterior lighting of the vehicle, such as stop lights, indicator lights, headlights, fog lights, reverse lights, rear fog light, etc., and a sufficiently large forward, and potentially backward, field of view for the driver, which normally is restricted by the vehicle structure.

There exists a need for an improved technique which mitigates or avoids the aforesaid problems.

### Summary of the invention

The problem is solved by means of an aerodynamic system according to claim 1 and by a vehicle according to claim 15.

According to a first aspect, an aerodynamic system for a vehicle is provided. The aerodynamic system comprises an aerodynamic component which is configured to be movable relative to a body of the vehicle between a retracted position and at least one extended position of the aerodynamic system, when the aerodynamic system is mounted on the vehicle. The aerodynamic system further comprises at least one lighting device for the vehicle, the at least one lighting device being arranged on the aerodynamic component, wherein the at least one lighting device is integrated in an exterior shell of the aerodynamic component, and the exterior shell of the aerodynamic component doubles as a housing of the at least one lighting device, in particular wherein the exterior shell constitutes both a housing of the aerodynamic component and a housing of the at least one lighting device. The aerodynamic system further comprises a variable supply line for the at least one lighting device, the variable supply line being adapted to transmit an operational supply provided by at least one supply source of the vehicle to the at least one lighting device, wherein the variable supply line is variable at least in accordance with a movement range of the aerodynamic component between the retracted position and the at least one extended position. The at least one lighting device is arranged to be visible from outside the vehicle when the aerodynamic system is in the retracted position.

The variable supply line can comprise a supply cable. The variable supply line can comprise one or more electrical sliding contacts.

The at least one lighting device can be visible from outside the vehicle when the aerodynamic system is in any position, such as in the extended position and/or any other intermediate position.

The aerodynamic system enables that an aerodynamic characteristic of the vehicle can be modified by translationally moving the aerodynamic component. In this way, one or more driving characteristics of the vehicle, such as drag, downward pressure, etc., can be modified. Modifying the aerodynamic characteristic of the vehicle can be advantageous, in particular, depending on a driving situation, a drive mode, a driver's driving capability and/or a driver's individual preferences and comfort. Moreover, providing at least one lighting device for the vehicle which is arranged on the aerodynamic component enables a compact arrangement of an exterior lighting of the vehicle, in particular without the at least one lighting device extending further into the driver's field of view and/or without demanding additional space in the vehicle body. Improved compactness and an increased range of potential shapes of the aerodynamic component and/or the at least one lighting device are further facilitated by the exterior shell of the aerodynamic component, which doubles as a housing of the at least one lighting device. That is, the at least one lighting device is integrated in the exterior shell without requiring an additional dedicated housing for the arrangement of individual components of the lighting device. The aforesaid functionalities are further facilitated by the provision of a variable supply line. In the case of a translational movability of the aerodynamic component, a variable supply line is enabled which exhibits advantageous reliability and durability. This further enables a use in accordance with common legal requirements concerning reliability of a supply line for safety-relevant vehicle lights, such as a stop light.

The term "aerodynamic component" may denote any portion of the vehicle which is translationally movable relative to the vehicle body, and which influences an aerodynamic characteristic of the vehicle, wherein moving the aerodynamic component changes an influence which the aerodynamic component has on the aerodynamic characteristic of the vehicle.

The exterior shell may comprise on an inner surface a plurality of support contours adapted to individually accommodate each of a plurality of lighting device components of the at least one lighting device. In this way, dispensability of an additional, dedicated, housing for the arrangement of individual components of the lighting device is facilitated, and a stable positioning of the components of the lighting device is achievable.

The aerodynamic component can be an active aerodynamic device which is automatically movable between the retracted position and the at least one extended position.

The aerodynamic component can comprise at least one of a movable rear gurney flap or a movable rear spoiler.

The at least one lighting device can comprise at least one stop light for the vehicle.

When the aerodynamic component comprises a movable rear gurney flap or a movable rear spoiler, and the at least one lighting device comprises a stop light which is integrated in the movable rear gurney flap or the movable rear spoiler, the at least one lighting device can be implemented to constitute a center high-mount stop light (CHMSL) of the vehicle. By integrating the CHMSL in a movable rear gurney flap or a movable rear spoiler, a compact arrangement of both the movable rear gurney flap or the movable rear spoiler and the CHMSL can be achieved. In this way, no additional space in the vehicle structure for accommodating the CHMSL is required. Moreover, a rearward field of view for the driver does not need to be reduced by the provision of the CHMSL.

The aerodynamic component can be adapted to be translationally moved parallel to a translational direction of the aerodynamic system when the aerodynamic component is moved between the retracted position and the at least one extended position. The translational direction can be straight or curved. In addition, the aerodynamic component can be adapted to be moved rotation-less.

The term "rotation-less" may denote the absence of a rotational motion of the aerodynamic component, except when such a rotational motion results (intrinsically) from a translational motion of the aerodynamic component, that is, parallel to a curved translational direction, for example, supported by one or more curved guide rails of the aerodynamic system. The term "rotation-less" may in particular imply the absence of structural means, such as rotational bearings and/or rotational actuating means of the aerodynamic system, which enable rotation of the aerodynamic component, or parts thereof, about an internal axis of the aerodynamic component and/or independently from a translational motion.

Moving the aerodynamic component rotation-less and parallel to a straight translational direction facilitates maintaining an orientation of the at least one lighting device, when the aerodynamic component is moved. This enables use with a security-relevant lighting device for the vehicle, such as a stop light, a fog light, etc., which in various jurisdictions need to comply with a predefined orientation range, a predefined range of an emission angle and/or a predefined spatial intensity distribution. Furthermore, moving the aerodynamic component rotation-less facilitates a reliable and durable implementation of the variable supply line, in particular, since torsions of the variable supply line in connection with a moving of the aerodynamic component can be reduced or totally avoided. This further facilitates a use with one or more security-relevant lighting devices for the vehicle.

The variable supply line can extend at least partially in the aerodynamic component.

The variable supply line can comprise at least one supply cable and a cable retraction arrangement configured to facilitate a variable extension of the at least one supply cable in accordance with the movement range of the aerodynamic component.

The cable retraction arrangement can comprise at least one elastic element, in particular at least one spring, which acts on and/or is integral to the at least one supply cable.

The at least one supply cable can comprise a spiral section, wherein the cable retraction arrangement comprises at least one of an elastic cladding of the supply cable in the spiral section, a spiral spring attached to the supply cable and arranged parallel to the spiral section, and/or a supply-transmitting element of the supply cable, wherein the supply-transmitting element has been selected to exhibit an elasticity modulus suitable for rendering the supply cable elastically extendable in accordance with the movement range of the aerodynamic component.

The cable retraction arrangement can comprise a coil spring adapted to elastically wind or unwind at least a portion of the supply cable.

The cable retraction arrangement can further comprise at least one guide structure configured to guide a motion of the at least one supply cable when the aerodynamic component is moved between the retracted position and the at least one extended position.

The at least one lighting device can comprise at least one electric light-producing element. In this case, the variable supply line can comprise at least one electric cable adapted to transmit an electric current provided by an electric power source of the vehicle to the at least one light-producing element.

In addition, or as an alternative, the at least one lighting device can comprise at least one light-deflecting element. Moreover, the variable supply line can comprise at least one optical cable adapted to guide light provided by at least one light source of the vehicle to the at least one light-deflecting element.

According to another aspect, an aerodynamic system for a vehicle is provided. The aerodynamic system comprises an aerodynamic component which is translationally movable relative to a body of the vehicle parallel to a translational direction of the aerodynamic system, at least one lighting device for the vehicle, the at least one lighting device being arranged on the aerodynamic component, and a variable supply line for the at least one lighting device. The variable supply line is adapted to transmit an operational supply provided by at least one supply source of the vehicle to the at least one lighting device. The variable supply line is variable in accordance with a translational position of the aerodynamic component with respect to the translational direction.

According to another aspect, a vehicle is provided. The vehicle comprises an aerodynamic system as provided herein.

### Brief description of the figures

Further details, objectives and advantages of the invention become clear from the drawings and the following detailed description. There is shown in:
- Figs. 1 and 2: aerodynamic systems for a vehicle according to various examples;
- Fig. 3: a variable supply line according to an example;
- Figs. 4 to 7: aerodynamic systems for a vehicle according to other examples, and
- Fig. 8: a vehicle according to an example.

### Examples

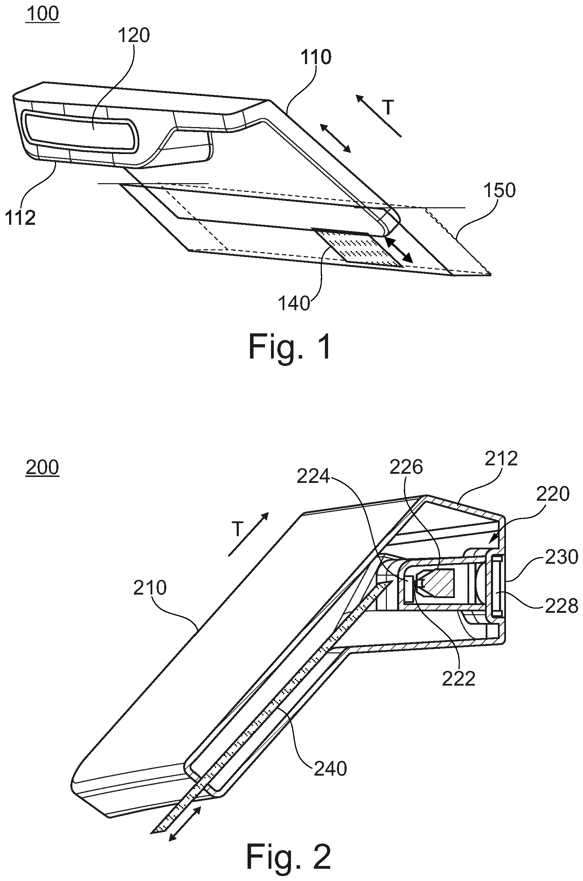

Fig. 1 shows schematically and exemplarily an aerodynamic system 100 for a vehicle. The aerodynamic system 100 comprises an aerodynamic component 110. As indicated by the single arrow in Fig. 1, the aerodynamic component 110 is adapted to be moved in a translational manner relative to a body of the vehicle in which the aerodynamic system 100 is mounted, parallel to a translational direction T of the aerodynamic system 100. Moreover, as indicated by the double arrows in Fig. 1, the aerodynamic component 110 is adapted to be reversibly movable, i.e., in both directions parallel to the translational direction T.

The aerodynamic system 100 further comprises a lighting device 120 which is arranged on the aerodynamic component 110. The lighting device 120 is configured to serve as a lighting device for a vehicle in which the aerodynamic system 100 is mounted.

The aerodynamic system 100 further comprises a variable supply line 140 for the lighting device 120. The variable supply line 140 is configured to transmit an operational supply provided by a supply source of the vehicle, for example, a battery or a light source, towards the lighting device 120. As indicated in Fig. 1 by the double arrow adjacent the variable supply line 140, the variable supply line 140 is adapted to vary in accordance with a movement of the aerodynamic component 110.

In the shown example, the aerodynamic system 100 further comprises a support structure 150 which supports, and at least partially accommodates, the aerodynamic component 110 and the variable supply line 140. The support structure 150 also is adapted to facilitate a mounting of the aerodynamic system 100 in a vehicle structure.

In the shown example, the translational direction T is a straight direction. In other examples, the translational direction T is a curved direction, for example, according to a curved shape of the aerodynamic component 110 and/or according to one or more curved guide rails of the support structure 150 which guide a motion of the aerodynamic component 110.

In the shown example, the aerodynamic component 110 is a rear gurney flap. Furthermore, in the example, the lighting device 120 is a center high mounted stop light, CHMSL, for the vehicle. However, it will be understood that in other examples the features and advantages of the aerodynamic system 100 described herein can be accordingly implemented and achieved, for example, in connection with other types of aerodynamic components and/or other types of vehicle lights.

In some examples, the lighting device 120 includes an electric light-producing element, such as a light emitting diode, LED, or a light bulb. In such examples, the variable supply line 140 comprises one or more electric cables which are adapted to transmit electric current between an electric power source, such as a battery, of the vehicle and the electric light-producing element. In other examples, the lighting device 120 comprises at least one light deflecting element, such as a mirror or a light guide, and the variable supply line 140 is adapted to guide light which has been produced by means of a light source external to the aerodynamic system 100 towards the lighting device 120.

The lighting device 120 is integrated in the aerodynamic component 110, in particular, in an exterior shell 112 of the aerodynamic component 110.

The aerodynamic component 110 is adapted to be reversibly moved parallel to the translational direction T of the aerodynamic system 100. In some examples, the aerodynamic component 110 is manually extendable in the translational direction T, and manually retractable against the translational direction, between a retracted position and at least one extended position of the aerodynamic component 110. In other examples, the aerodynamic component 110 is an active aerodynamic component which is automatically movable in a reversible manner parallel to the translational direction T, for example, by means of one or more actuators (not shown) of the aerodynamic system 100.

The aerodynamic component 110 is in some examples moveable between the retracted position and each one of multiple extended positions. In some examples, the multiple extended positions comprise two or more discreet extended positions between which the aerodynamic component 110 is movable gradually or in other words in a stepped manner. In some examples, the multiple extended positions comprise a continuum of extended positions between which the aerodynamic component 110 is movable in a continuous or in other words stepless manner.

As indicated schematically in Fig. 1, the lighting device 120 is arranged to be visible from outside the vehicle even when the aerodynamic system 100 is in the retracted position. This facilitates a use of the lighting device 120 as a security-relevant light, for example, as a stop light, as the lighting device 120 is visible to other traffic participants independently from a position of the aerodynamic system 100.

As described in more detail in connection with Fig. 2, the exterior shell 112 of the aerodynamic component 110 doubles as a housing of the at least one lighting device 120. In other words, the exterior shell 112 constitutes both a housing of the aerodynamic component 110 and a housing of the at least one lighting device 120. This enables a compact implementation and extends a range of possible shapes of the aerodynamic system 100, which enhances a usability with various vehicle designs.

In the example of Fig. 1, a motion of the aerodynamic component 110 is limited to a translational motion parallel to the translational direction T, i.e., is restricted to a rotation-less motion. Restricting the motion of the aerodynamic component 110 to a translational motion parallel to a predefined direction facilitates a reliable and durable implementation of the variable supply line 140. It further facilitates the use of the aerodynamic system 100 in combination with safety-relevant lighting for a vehicle by means of the lighting device 120. In particular, an orientation of the lighting device 120 can be kept constant when the aerodynamic component 110 is moved rotation-less by a translational motion parallel to a straight translational direction T.

However, in other examples, the aerodynamic component 110 can be adapted to perform rotation simultaneously with, or apart from, a translational motion. In particular, implementations of the aerodynamic system 100 in which the aerodynamic component 110 is a rear spoiler (instead of a rear gurney flap as shown in Fig. 1), a variable tilt of the rear spoiler can be produced depending on the translational position of the rear spoiler parallel to the translational direction T.

For this purpose, in some examples, an automatic rotational motion is superimposed on a translational motion of the rear spoiler. However, even when the aerodynamic component 110 is implemented as a front or rear spoiler, the aerodynamic component 110 is in some examples restricted to a translational motion parallel to the translational direction of the aerodynamic system 100, wherein the translational direction is straight or curved. Moreover, when the aerodynamic component 110 is a front spoiler, the at least one lighting device 120 comprises in some examples one or more fog lights of the vehicle.

Fig. 2 shows schematically and exemplarily an aerodynamic system 200. The aerodynamic system 200 is representative of some examples of the aerodynamic system 100 shown in Fig. 1.

The aerodynamic system 200 comprises an aerodynamic component 210 in the form of a rear gurney flap. The aerodynamic component 210 is adapted to be reversibly movable parallel to the translational direction T of the aerodynamic system 200. In an exterior shell 212 of the aerodynamic component 210, a lighting device 220 is arranged. The aerodynamic system 200 further comprises a variable supply line 240 adapted to transmit an operational supply from an external supply source to the lighting device 220. Regarding these features of the aerodynamic system 200, the description of the aerodynamic component 110, the lighting device 120, the variable supply line 140 and the exterior shell 212 of the aerodynamic system 100 apply correspondingly unless differently clear from the drawings and the following description.

In the aerodynamic system 200, the lighting device 220 comprises an electric light-producing element 222, for example, a light emitting diode or a light bulb. In the shown example, the light-producing element 222 is arranged on a printed circuit board 224. Moreover, the variable supply line 240 extends partially within the aerodynamic component 210 and contacts the printed circuit board 224. In this example, the variable supply line 240 includes at least one electric cable which is adapted to transmit electric current between an electric power source of the vehicle and the electric light-producing element 222.

The aerodynamic system 200 further includes a plurality of optical components which are arranged to deflect light produced by the light producing element 222. In the shown example, optical components of the lighting device 220 include a slim thickwall optic 226, a diffuser 228, and an outer lens 230 on which the diffuser 228 is mounted and which flushes with an outer contour of the exterior shell 212.

As shown schematically in Fig. 2, the exterior shell 212 comprises on its inner surface a plurality of support contours which individually accommodate each of various components 222, 226, 230 of the lighting device 220. In this way, the exterior shell 212 doubles as a housing of the lighting device 220, such that an additional, dedicated, housing for the arrangement of individual components of the lighting device 212 can be dispensed with. At the same time, secure positioning of the components 222, 226, 230 is achieved.

In the aerodynamic system 200, as described above, the lighting device 220 includes a light-producing element 222. In other examples, a light-producing element is external to the aerodynamic system, for example, arranged in the body of the vehicle. In such examples, the variable supply line is configured to transmit light which has been produced by the external light-producing element to the lighting device of the aerodynamic system 200, in particular to optical components which deflect the light that has been coupled out from the variable supply line 240 at the lighting device 220.

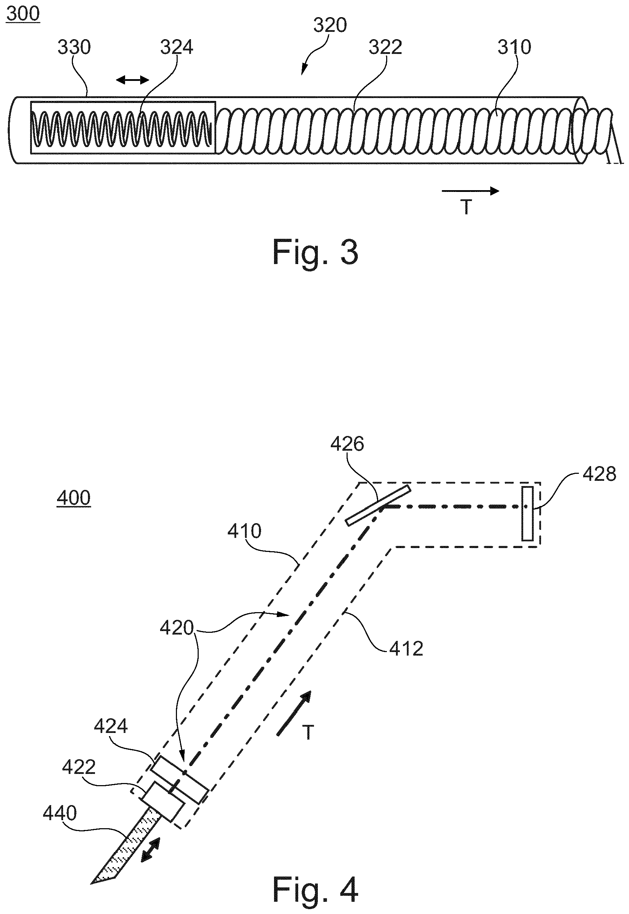

Fig. 3 shows schematically and exemplarily a variable supply line 300 for use in an aerodynamic system as described herein. The variable supply line 300 comprises one or more supply cables 310. The variable supply line 300 further comprises a cable retraction arrangement 320. The cable retraction arrangement 320 is configured to facilitate a variable extension of the supply cable 310 parallel to a translational direction T of an aerodynamic system in which the variable supply line 300 is used. In the shown example, the variable supply line 300 further comprises a guide structure 330, which is exemplarily shown as a tubular structure in which the supply cable 310 is at least partially arranged. The variable supply line 300 is configured to provide an operational connection between a lighting device arranged on an aerodynamic component of the aerodynamic system and a supply source arranged in a body of a vehicle. For this purpose, the variable supply line 300 is further configured to provide a variable mechanical connection between the movable aerodynamic component of the aerodynamic system and the body of the vehicle.

In the shown example, the cable retraction arrangement 320 includes an elastic cladding 322 of the supply cable 310 in combination with a spiral shape of the supply cable 310. The cable retraction arrangement 320 further includes a spiral spring 324 which is attached to a spiral portion of the supply cable 310. Each of the elastic cladding 322 and the spiral spring 324 facilitate elastic, reversible extension of the supply cable 310 parallel to the translational direction T.

In other examples of the variable supply line 300, the cable retraction arrangement includes other and/or additional retraction means. In some examples, a spiral section of the supply cable 310 comprises a supply transmitting element, such as an electric wire, which has been selected to exhibit an elasticity modulus suitable for rendering the supply cable 310 elastically extendable parallel to the spiral axis, as needed, in accordance with the translational movement of the aerodynamic component. For example, each of a material, a thickness, and a spiral shape of the supply transmitting element, such as a metal wire, has been selected to produce, in combination, the required elasticity modulus in the translational direction T. In some of these examples, an elastic cladding of the supply cable 310 is dispensed with.

In further examples, the cable retraction arrangement 320 additionally or alternatively comprises a coil spring (not shown). The coil spring acts on a coil for automatically winding and/or unwinding the supply cable 310, at least partially.

In some examples, at least a portion of the cable retraction arrangement 320 is configured to be fixedly connected to a body of the vehicle. Moreover, in some examples, at least a portion of the cable retraction arrangement 320 is configured to be fixedly connected, additionally or alternatively, to the aerodynamic component. In other examples, the cable retraction arrangement 320 is not fixedly connected to any of a body of the vehicle and the aerodynamic component.

The guide structure 330 serves for guiding a motion of the supply cable 310, in particular, parallel to the translational direction T. Alternatively, in some examples, a guide structure 330 can be dispensed with, for example, if the supply cable 310 and/or the cable retraction arrangement 320 provide sufficient stability to confine a motion of the cable 310 essentially to a motion parallel to the translational direction T.

In the example shown in Fig. 3, the translational direction T is a straight direction. However, the above description applies analogously to other examples in which the translational direction T is curved.

Furthermore, the variable supply line 300 as shown is configured to provide operational supply in accordance with a rotation-less motion of an aerodynamic component, using a flexible supply cable 310. In other examples, operational electric supply is provided via the variable supply line 300 using one or more electrical sliding contacts. In addition, or as an alternative, the variable supply line 300 provides in some examples for operational supply also in connection with a rotational motion of an aerodynamic component. In some of these examples, the variable supply line 300 additionally comprises for this purpose one or more rotational electrical sliding contacts.

Fig. 4 shows schematically and exemplarily an aerodynamic system 400. The aerodynamic system 400 comprises an aerodynamic component 410, on which a lighting device 420 is arranged and supplied with an operational supply by means of a variable supply line 440. The above description of the aerodynamic systems 100 and 200 applies correspondingly to the aerodynamic system 400 unless differently clear from the drawings and the following description.

An electric light-producing element 422 of the lighting device 420 is arranged at a vehicle body-sided end of the aerodynamic component 410. An electric contact of the light-producing element 422 extends through the exterior shell 412 of the aerodynamic component 410. The variable supply line 440 accordingly extends essentially outside the aerodynamic component 410. Moreover, the aerodynamic system 400 comprises a plurality of optical components for transmitting and deflecting light which has been produced by means of the light producing element 422 through the aerodynamic component 410 inside the exterior shell 412. As shown schematically in Fig. 4, the optical components include a collimator 424, a mirror 426, and a diffuser 428. However, other examples of the aerodynamic system 400 comprise additional and/or other optical components for directing light in the exterior shell 412.

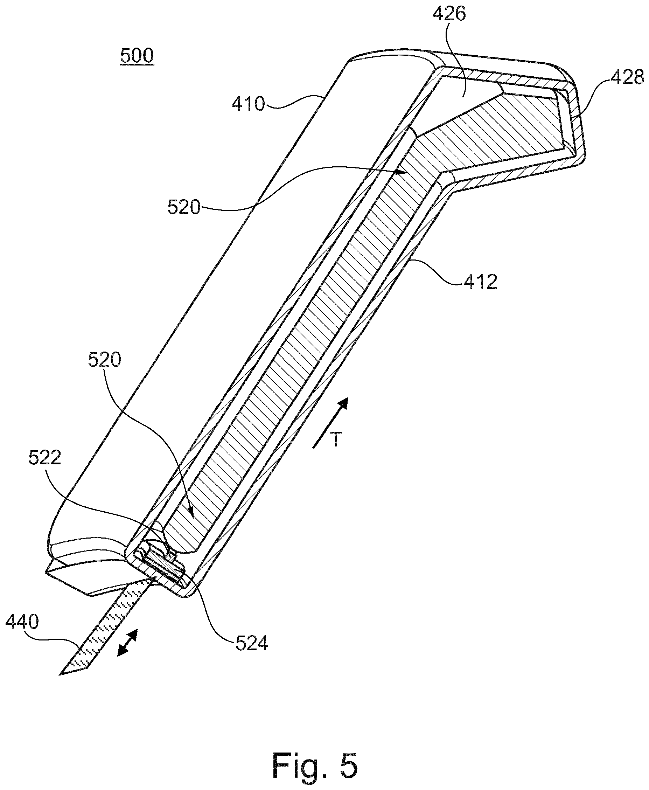

Fig. 5 shows schematically and exemplarily an aerodynamic system 500. The above description of the aerodynamic system 400 applies correspondingly to the aerodynamic system 500 unless differently clear from the drawings and the following description.

The aerodynamic system 500 comprises a lighting device 520, which includes an arrangement of multiple light emitting diodes, LEDs, 522 as light-producing elements. The multiple LEDs 522 are arranged on, and operated via, a printed circuit board, PCB, 524.

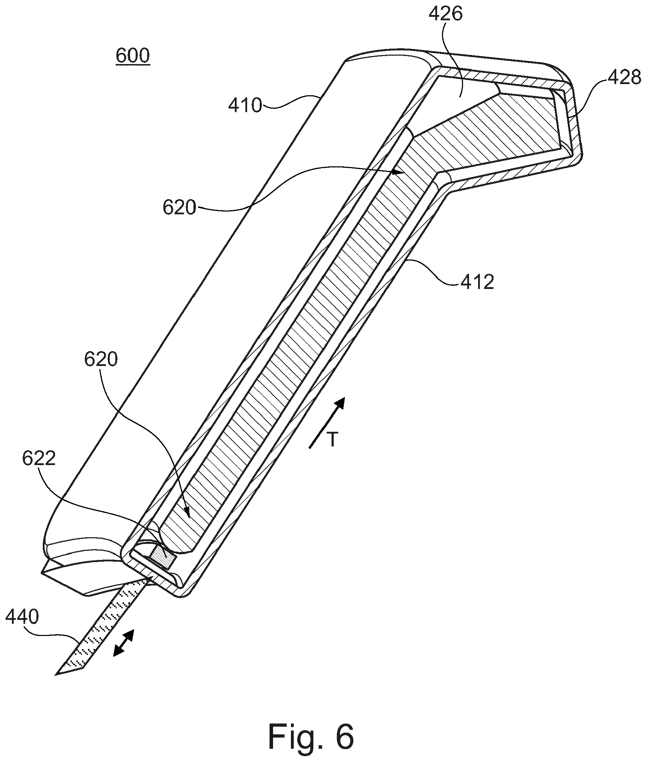

Fig. 6 shows schematically and exemplarily an aerodynamic system 600. The above description of each of the aerodynamic systems 400, 500 applies correspondingly to the aerodynamic system 600 unless differently clear from the drawings and the following description.

The aerodynamic system 600 comprises a lighting device 620, which includes a three-dimensional, 3D-, light emitting diode, LED, 622 as a light-producing element.

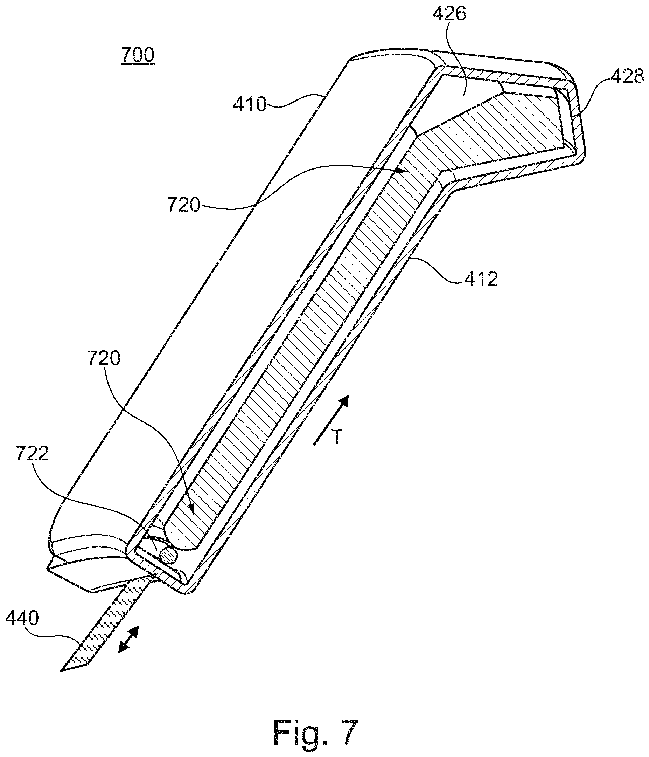

Fig. 7 shows schematically and exemplarily an aerodynamic system 700. The above description of each of the aerodynamic systems 400, 500, 600 applies correspondingly to the aerodynamic system 700 unless differently clear from the drawings and the following description.

The aerodynamic system 700 comprises a lighting device 720, which includes a lightguide 722. The lightguide 722 is configured to guide light, which has been received from a light-producing element, and to outcouple the received light, as needed, at suitable positions of a surface of the lightguide 722. The light-producing element resides in some examples in the aerodynamic component 410. In other examples, the light-producing element resides outside the aerodynamic component 410, in a body of the vehicle. When the light-producing element resides outside the aerodynamic component 410, the variable supply line 440 includes a variable lightguide which operatively connects the lightguide 722 and the light-producing element.

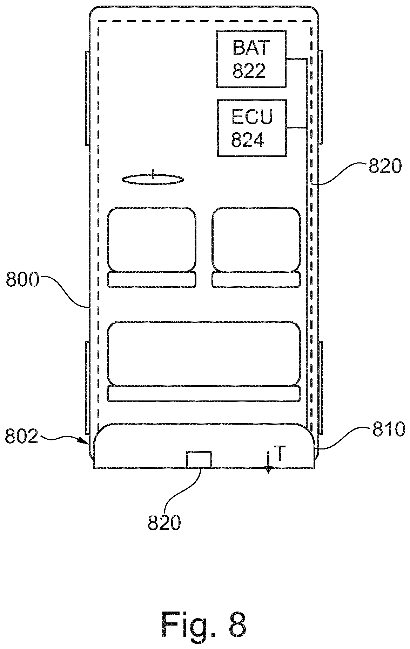

Fig. 8 shows schematically and exemplarily a vehicle 800. The vehicle 800 comprises an aerodynamic system 802 in accordance with any of the examples described above. In the shown example, the aerodynamic system 802 comprises an aerodynamic component 810 in the form of a rear gurney flap, in which a lighting device 820 is arranged to function as a center high mount stop light, CHMSL.

The vehicle 800 comprises a vehicle system 820 which includes the aerodynamic system 802. The vehicle system 820 further includes an electric power source 822 and a control unit 824 operatively connected to the electric power source 822 and the aerodynamic system 802. The control unit 824 is configured to control functionalities of the aerodynamic system 802, including an operation of the lighting device 820 and an automatic movement of the aerodynamic component 810 parallel to a translational direction T of the aerodynamic system 802. Automatic movement of the aerodynamic component 810 is performed, for example, by means of an actuator arrangement (not shown) of the aerodynamic system 802, which is powered by means of the electric power source 822.

## Claims

1. Aerodynamic system (100; 200; 400; 500; 600; 700; 802) for a vehicle (800), the aerodynamic system (100; 200; 400; 500; 600; 700; 802) comprising:
- an aerodynamic component (110; 210; 410; 810) which is configured to be movable relative to a body of the vehicle (800) between a retracted position and at least one extended position of the aerodynamic system (100; 200; 400; 500; 600; 700; 802), when the aerodynamic system (100; 200; 400; 500; 600; 700; 802) is mounted on the vehicle (800),
- at least one lighting device (120; 220; 420; 520; 620; 720; 820) for the vehicle (800), the at least one lighting device (120; 220; 420; 520; 620; 720; 820) being arranged on the aerodynamic component (110; 210; 410; 810), wherein:
o the at least one lighting device (120; 220; 420; 520; 620; 720; 820) is integrated in an exterior shell (112; 212; 412) of the aerodynamic component (110; 210; 410; 810), and
∘ the exterior shell (112; 212; 412) of the aerodynamic component (110; 210; 410; 810) doubles as a housing of the at least one lighting device (120; 220; 420; 520; 620; 720; 820), in particular wherein the exterior shell (112; 212; 412) constitutes both a housing of the aerodynamic component (110; 210; 410; 810) and a housing of the at least one lighting device (120; 220; 420; 520; 620; 720; 820), and
- a variable supply line (140; 240; 300; 440) for the at least one lighting device (120; 220; 420; 520; 620; 720; 820), the variable supply line (140; 240; 300; 440) being adapted to transmit an operational supply provided by at least one supply source (822) of the vehicle (800) to the at least one lighting device (120; 220; 420; 520; 620; 720; 820), wherein the variable supply line (140; 240; 300; 440) is variable at least in accordance with a movement range of the aerodynamic component (110; 210; 410; 810) between the retracted position and the at least one extended position,
wherein the at least one lighting device (120; 220; 420; 520; 620; 720; 820) is arranged to be visible from outside the vehicle (800) when the aerodynamic system (100; 200; 400; 500; 600; 700; 802) is in the retracted position.

2. Aerodynamic system according to claim 1, wherein the exterior shell (112; 212; 412) comprises on an inner surface a plurality of support contours adapted to individually accommodate each of a plurality of lighting device components (222, 226, 230; 422, 424, 426, 428; 522, 524; 622; 722) of the at least one lighting device (120; 220; 420; 520; 620; 720; 820).

3. Aerodynamic system according to claim 1 or claim 2, wherein the aerodynamic component (110; 210; 410; 810) is an active aerodynamic component which is automatically movable between the retracted position and the at least one extended position.

4. Aerodynamic system according to any one of the preceding claims, wherein the aerodynamic component (110; 210; 410; 810) comprises at least one of a movable rear gurney flap or a movable rear spoiler.

5. Aerodynamic system according to claim 4, wherein the at least one lighting device (120; 220; 420; 520; 620; 720; 820) comprises at least one stop light for the vehicle (800).

6. Aerodynamic system according to any one of the preceding claims, wherein the aerodynamic component (110; 210; 410; 810) is adapted to be moved parallel to a translational direction (T) of the aerodynamic system (100; 200; 400; 500; 600; 700; 802) when the aerodynamic component (110; 210; 410; 810) is moved between the retracted position and the at least one extended position.

7. Aerodynamic system according to claim 6, wherein the aerodynamic component (110; 210; 410; 810) is adapted to be moved rotation-less and/or parallel to a curved translational direction (T) of the aerodynamic system (100; 200; 400; 500; 600; 700; 802) when moved between the retracted position and the at least one extended position.

8. Aerodynamic system according to any one of the preceding claims, wherein the variable supply line (240) extends at least partially in the aerodynamic component (210).

9. Aerodynamic system according to any one of the preceding claims, wherein the variable supply line (300) comprises at least one supply cable (310) and a cable retraction arrangement (320) configured to facilitate a variable extension of the at least one supply cable (310) in accordance with the movement range of the aerodynamic component (110; 210; 410; 810).

10. Aerodynamic system according to claim 9, wherein the cable retraction arrangement (320) comprises at least one elastic element (322, 324), in particular at least one spring (324), which acts on and/or is integral to the at least one supply cable (310).

11. Aerodynamic system according to claim 9 or 10, wherein the at least one supply cable (310) comprises a spiral section, wherein the cable retraction arrangement (320) comprises at least one of:
- an elastic cladding (322) of the supply cable (310) in the spiral section,
- a spiral spring (324) attached to the supply cable (310) and arranged parallel to the spiral section,
- a supply-transmitting element of the supply cable (310), wherein the supply-transmitting element has been selected to exhibit an elasticity modulus suitable for rendering the supply cable (310) elastically extendable in accordance with the movement range of the aerodynamic component (110; 210; 410; 810).

12. Aerodynamic system according to claim 10 or 11, wherein the cable retraction arrangement (320) comprises a coil spring adapted to elastically wind or unwind at least a portion of the supply cable (310).

13. Aerodynamic system according to any one of claims 9 to 12, wherein the cable retraction arrangement (320) further comprises at least one guide structure (330) configured to guide a motion of the at least one supply cable (310) when the aerodynamic component (110; 210; 410; 810) is moved between the retracted position and the at least one extended position.

14. Aerodynamic system according to any one of the preceding claims, wherein:
the at least one lighting device (220; 420; 520; 620; 720; 820) comprises at least one electric light-producing element (222; 422; 522; 622; 722), and the variable supply line (240; 440) comprises at least one electric cable adapted to transmit an electric current provided by an electric power source (822) of the vehicle (800) to the at least one light-producing element (222; 422; 522; 622; 722), and/or
the at least one lighting device (120) comprises at least one light-deflecting element, and the variable supply line (140) comprises at least one optical cable adapted to guide light provided by at least one light source of the vehicle (800) to the at least one light-deflecting element.

15. Vehicle (800) comprising an aerodynamic system according to any one of the preceding claims.
